# EUROPÄISCHE PATENTSCHRIFT

(11) **EP 3 864 429 B1**
(45) Veröffentlichungstag und Bekanntmachung des Hinweises auf die Patenterteilung: **26.03.2025**
(21) Anmeldenummer: 19779509.9
(22) Anmeldetag: 04.10.2019
(51) Int. Cl.: G01S 13/931, G01S 17/931, G01S 7/497, G01S 7/481, G01S 7/40, G01S 17/42

(54) **UMFELDSENSOR MIT BEWEGLICHER UMLENKEINRICHTUNG FÜR KRAFTFAHRZEUGE**
ENVIRONMENT SENSOR WITH MOVABLE DEFLECTION DEVICE FOR MOTOR VEHICLES
CAPTEUR D'ENVIRONNEMENT POURVU DE DISPOSITIF DE RENVOI MOBILE POUR VÉHICULES AUTOMOBILES

(30) Priorität: 10.10.2018 EP 18199525
(43) Veröffentlichungstag der Anmeldung: 18.08.2021
(73) Patentinhaber: Covestro Deutschland AG, 51373 Leverkusen (DE)
(72) Erfinder: HAGEN, Rainer, 51377 Leverkusen (DE); GRIMM, Thomas, 50765 Köln (DE); GROSSER, Ulrich, 51515 Kürten (DE); MEYER, Alexander, 40489 Düsseldorf (DE); KLEIN, Andreas, 51371 Leverkusen (DE); HINZMANN, Dirk, 50259 Pulheim (DE); CAPELLEN, Peter, 47803 Krefeld (DE); OSER, Rafael, 47800 Krefeld (DE)
(74) Vertreter: Levpat
(86) Internationale Anmeldenummer: PCT/EP2019/076924
(87) Internationale Veröffentlichungsnummer: WO 2020/074392

(56) Entgegenhaltungen:
- DE-B3- 102012 112 987
- DE-B3- 102016 111 615

## Beschreibung

Die Erfindung betrifft ein Sensorsystem für ein Fahrzeug, insbesondere Kraftfahrzeug, umfassend ein Sensorgehäuse und einen darin angeordneten aktiven oder passiven Sensor mit einer auf Strahlungsdetektion beruhenden Sensorik sowie einer dem Sensor zugeordneten Messeinrichtung, wobei das Sensorgehäuse auf seiner in Detektionsrichtung des Sensors befindlichen Seite eine für den Sensor signaldurchlässige Abdeckung aufweist und wobei der Erfassungsbereich des Sensors im Bereich der signaldurchlässigen Abdeckung eine geringere Ausdehnung besitzt als die signaldurchlässige Abdeckung. Die Erfindung betrifft ferner ein Verfahren zum Betreiben eines solchen Sensorsystems sowie ein Kraftfahrzeug, welches mit einem derartigen Sensorsystem ausgerüstet ist.

Fahrerassistenzsysteme sind Einrichtungen im Kraftfahrzeug, die zur Steigerung des Fahrkomforts und der Sicherheit dienen. Fortschrittliche Fahrerassistenzsysteme ermöglichen sogar hoch automatisiertes und autonomes Fahren. Bei solchen teil- und vollautonomen Fahrzeugen werden besonders hohe Anforderungen an die Funktion der Umfeldsensoren gestellt. Sie basieren z.B. auf digitaler Kamera-, Radar- und Lidar-Technik. Kameras sind kompakte optische Systeme mit Photozellen, die hochaufgelöste Bilder der Umgebung erfassen. Radar- (Radio Detection and Ranging) und Lidar-Sensoren (Light Detection And Ranging), seltener auch Ladar genannt (Laser Detection and Ranging), bilden zusammen mit den Kameras und ggf. weiteren Sensortypen einen digitalen Sensorverbund, der auf Datenfusion und hoher Signalredundanz aufbaut. Durch präzise Objekterkennung, Objektklassifizierung und die Erzeugung digitaler Umgebungskarten in Echtzeit macht das Sensorsystem sicheres autonomes Fahren bei unterschiedlichen Fahr-, Straßen- und Wetterbedingungen möglich.

Funktionierende, ausfallsichere Sensoren sind die Grundvoraussetzung für teil- und vollautonomes Fahren. Eine wesentliche technische Aufgabe dabei ist es, die Funktion des Sensors, der hinter einer durch Witterungs- und Gebrauchseinflüsse verschmutzten oder beschädigten Sensorschutzabdeckung sitzt, zu erhalten.

Verschmutzung entsteht z.B. durch von der Straße aufgewirbelten fest sitzenden Staub, Insekten, Vogelkot, Schneematsch, angetrocknetes Schmutzwasser, sowie jede Art von Partikeln oder Flüssigkeiten. Verschmutzung kann z.B. ebenso durch Staub, sowie jede Art von Partikeln oder Flüssigkeiten entstehen, die sich an der Innenseite der Sensorschutzabdeckung festsetzen. Zur Schädigung der Sensorschutzabdeckung zählt man z.B. Abrieb, Kratzer, Erosion, Risse, Absplitterungen, Deformation, Quellung, Trübung und Verfärbung, entweder in der flächigen Abdeckung des Scheibenkörper selbst oder in mindestens einer seiner Komponenten, z.B. Lackschicht, Klebeschicht oder Dekorelement. Verschmutzungen und Schädigungen führen dazu, dass die vom Sensor zu detektierenden elektromagnetischen Wellen, ebenso wie die emittierten Wellen (je nach Typ Infrarotlicht, Funk- oder Mikrowellen) durch Absorption, Reflexion oder Streuung gedämpft oder abgelenkt werden. Dies kann zu unterschiedlichem sensorischen Fehlverhalten führen, insbesondere zu partiellem bis vollständigem Signalausfall, Verlust an Sensorreichweite, Verlust an Ortsauflösung, Fehlern in der Objekterkennung und im Geschwindigkeitsvectoring.

Im Stand der Technik finden sich Maßnahmen zur Reinigung verschmutzter Sensorabdeckungen. So ist in der DE 10 2010 055 113 A1 eine Reinigungsvorrichtung mit zumindest einer Spritzdüse beschrieben, die eine Reinigungsflüssigkeit mit hohem Druck auf mindestens eine der Sensorschutzabdeckungen spritzt und in Verbindung mit einer Heizung für die Flüssigkeit eine hohe Reinigungsleistung auch bei kalten Temperaturen erzielt.

In der US 2015/0090291 sind zusätzlich Wischer beschrieben, die die Scheibe vor dem Sensor reinigen können.

In der DE 10 2013 207 482 A1 sind beheizbare Flächenelemente beschrieben, die insbesondere zum Aufheizen von Radarabdeckungen dienen. Durch Aufheizen der Abdeckung können Schmutz und Beläge aus Eis und Schnee an- und abgetaut und Feuchtigkeit reduziert werden, was zu einer verbesserten Durchlässigkeit der Radarwellen führt.

Im Stand der Technik finden sich Software basierte Lösungen für den Umgang mit Signalverlust in sog. blinden Sensoren, oder mit nicht eindeutigen Sensorsignalen. Die US 2010/0235129 beschreibt die Korrelation von Signalen mehrerer Sensoren (Sensorfusion), wodurch der autonome Betrieb eines Fahrzeugs auch bei fehlenden, nicht zuordenbaren oder nicht eindeutigen Sensorsignalen aufrechterhalten werden kann.

Die DE 199 45 268 A1 beschreibt ein ähnliches Verfahren und eine Vorrichtung zur Erkennung des Sensorszustands hinsichtlich Verschmutzung und Blindheit. Dies sind kostengünstige Lösungen, weil sie Teil der elektronischen Sensorintelligenz sind.

Die DE 102012112987 B3 beschreibt einen optoelektronischen Sensor und ein Verfahren zur Erfassung und Abstandsbestimmung von Objekten mit Bestimmung eines Sichttrübungsmaßes. Dabei wird das Sichttrübungsmaß nicht global für die Umgebung des Sensors, sondern individuell für die jeweilige Abtastrichtung bestimmt.

Die DE 102016111615 B3 beschreibt einen Bildsensor welcher auf die Frontscheibe einer Sensoranordnung ausgerichtet ist und eine Recheneinheit die dafür ausgebildet ist, aus dem Signal des Bildsensors eine Verschmutzung der Frontscheibe zu erkennen.

Im Stand der Technik findet sich keine Lehre zum Handeln über die innersensorische Korrektur von Störungen in Folge üblichen Gebrauchsverschleißes der Sensorschutzabdeckung oder anderweitiger Schädigung derselben, hervorgerufen durch äußere mechanische oder witterungsbedingte Einwirkung. Die angeführten Beispiele zur Sensorintelligenz und Sensorfusion können nur die Wirkung eines Signalverlusts im Sensorverbund, aber nicht die Ursache des Signalausfalls beseitigen, und damit bleibt ein erhöhtes Sicherheitsrisiko in Verbindung mit dem autonomen Fahren verbunden.

Die Aufgabe der vorliegenden Erfindung bestand somit darin, ein Sensorsystem für ein Kraftfahrzeug zur Verfügung zu stellen, welches im Falle einer die Funktionsweise des Sensors beeinträchtigenden Verschmutzung oder lokal begrenzten Beschädigung der Sensorschutzabdeckung selbsttätig in der Lage ist, die Funktionsweise des Sensors wieder herzustellen, ohne dass der Sensor dafür ausgetauscht oder repariert werden muss.

Diese Aufgabe wird erfindungsgemäß mit einer bewegbaren Umlenkeinrichtung für die vom Sensor ausgesandten und zu empfangenden Signale gelöst, wobei diese Umlenkeinrichtung im Falle, dass ein Defekt das eingehende und/oder ausgehende Signale stört, gezielt neu ausgerichtet werden kann, so dass das entsprechende Signal am Defekt vorbei gelenkt wird. Die Bewegung der Umlenkeinrichtung kann beispielsweise durch eine gezielte laterale Verschiebung und/oder Rotation erfolgen.

Die Erfindung betrifft somit ein Sensorsystem für ein Fahrzeug, insbesondere Kraftfahrzeug, umfassend ein Sensorgehäuse und einen darin angeordneten aktiven oder passiven Sensor mit einer auf Strahlungsdetektion beruhenden Sensorik sowie einer dem Sensor zugeordneten Messeinrichtung, wobei das Sensorgehäuse auf seiner in Detektionsrichtung des Sensors befindlichen Seite eine für den Sensor signaldurchlässige Abdeckung aufweist und wobei der Erfassungsbereich des Sensors im Bereich der signaldurchlässigen Abdeckung eine geringere Ausdehnung besitzt als die signaldurchlässige Abdeckung, wobei das Sensorsystem dadurch gekennzeichnet ist, dass dem Sensor eine mit einer Steuerungseinrichtung gekoppelte bewegbare Umlenkeinrichtung zur Umlenkung der Strahlung des Sensors zugeordnet ist, wobei die Messeinrichtung derart ausgebildet ist, dass sie geeignet ist, im Erfassungsbereich des Sensors zu überprüfen, ob und in welchem Abschnitt die signaldurchlässige Abdeckung einen Bereich mit verringerter Signaldurchlässigkeit aufweist, wobei die Messeinrichtung mit der Steuerungseinrichtung der Umlenkeinrichtung in der Weise zusammenwirkt, dass die Steuerungseinrichtung die Position der Umlenkeinrichtung in der Weise verändern kann, dass der Bereich mit verringerter Signaldurchlässigkeit außerhalb des Erfassungsbereichs des Sensors liegt, wobei die Umlenkeinrichtung aus wenigstens zwei miteinander gekoppelten Umlenkelementen aufgebaut ist und die Umlenkeinrichtung oder wenigstens eines der Umlenkelemente aus einer passiven Position außerhalb des Erfassungsbereichs des Sensors in eine aktive Position im Erfassungsbereich des Sensors verfahrbar ist.

Der Grundgedanke der Erfindung besteht unter anderem darin, dass mithilfe der Umlenkeinrichtung ein beispielsweise lateral versetzter Strahlersatzweg für die Sensorik eingestellt wird, mit dem die Sensorstrahlen an dem Bereich mit verringerter Signaldurchlässigkeit vorbeigeführt werden kann.

Nach einer bevorzugten Ausführungsform des erfindungsgemäßen Sensorsystems ist der Sensor ausgewählt aus Radarsensoren, Lichtsensoren, insbesondere Lidar-Sensoren auf Basis von Lasern oder Leuchtdioden und Bilderfassungssensoren, wie sie beispielsweise in Rückfahr-, Front oder Umfeldkameras verwendet werden.

Der Sensor kann über eine Sendeeinrichtung und eine hiervon getrennte Empfangseinrichtung verfügen.

Die Umlenkeinrichtung ist bevorzugt in alle Raumrichtungen verfahrbar, um sämtliche Achsen drehbar und/ oder kippbar ausgestaltet. Hierdurch kann das System sehr flexibel verstellt werden, um Bereiche mit verringerter Signaldurchlässigkeit zu umgehen und die Funktionsfähigkeit des Sensors aufrechtzuerhalten. Die Umlenkeinrichtung kann hierzu beispielsweise an einer entsprechenden Halterung oder an einem Verfahrschlitten befestigt sein. Die Bewegung der Umlenkeinrichtung kann beispielsweise durch wenigstens einen der Umlenkeinrichtung zugeordneten Elektromotor, ein piezoelektrisches Element, oder ein hydraulisches Element erfolgen.

Die Umlenkeinrichtung kann ferner am Sensorgehäuse fixiert sein, insbesondere zwischen der signaldurchlässigen Abdeckung und dem Sensor. Die Fixierung hält dabei die Umlenkeinrichtung nicht ortsfest, sondern ist derart ausgestaltet, dass sie dieser die vorgenannten Möglichkeiten der Verstellbarkeit erlaubt. Insbesondere kann die Bewegung der Umlenkeinrichtung über einen Riemenantrieb, insbesondere einen Keilriemenantrieb, einen Schiebeschlitten, eine Drehvorrichtung, wie beispielsweise einen Drehteller oder auch in einer kardianischen Aufhängung mittels geeigneter Antriebe erfolgen.

Die Umlenkeinrichtung kann wenigstens einen Spiegel, ein Prisma, eine Kompensationsplatte, ein Keilfenster, eine Stufenlinse, ein Blazegitter, ein diffraktives optisches Element, ein holographisch-optisches Element oder Kombinationen hiervon umfassen.

Die Umlenkeinrichtung ist erfindungsgemäß aus wenigstens zwei miteinander gekoppelten Umlenkelementen aufgebaut, wobei vorzugsweise die wenigstens zwei miteinander gekoppelten Umlenkelemente über die Steuerungseinrichtung gemeinsam oder getrennt bewegbar ausgestaltet sein können oder wenigstens eines der Umlenkelemente ortsfest in dem Sensorsystem angeordnet ist, wobei das ortsfeste Umlenkelement vorzugsweise auf der Innenseite der signaldurchlässigen Abdeckung befestigt ist.

Erfindungsgemäß ist die Umlenkeinrichtung oder wenigstens eines der Umlenkelemente aus einer passiven Position außerhalb des Erfassungsbereichs des Sensors in eine aktive Position im Erfassungsbereich des Sensors (102) verfahrbar ausgestaltet. Hierdurch stört die Umlenkeinrichtung den Betrieb des Sensors im Normalzustand nicht, kann aber in dem Fall, dass die signaldurchlässige Abdeckung in einem Abschnitt einen Bereich mit verringerter Signaldurchlässigkeit aufweist, im Strahlenweg des Sensors verfahren werden und dadurch das Sensorsignal an dem Bereich mit verringerter Signaldurchlässigkeit vorbeiführen.

Die Umlenkeinrichtung kann derart ansteuerbar ausgebildet sein, dass vorgewählte Strahlversatzwege für die Strahlungswellendetektion oder durch Selbstkalibrierung des Sensors (102) ermittelte Strahlversatzwege einstellbar sind.

Die Prüfung, ob und in welchem Abschnitt die signaldurchlässige Abdeckung einen Bereich mit verringerter Signaldurchlässigkeit aufweist, kann im Prinzip auf jede dem Fachmann zu diesem Zweck bekannte Weise erfolgen, vorzugsweise mittels einer der Messeinrichtung zugeordneten Recheneinheit. Hierzu kann die Recheneinheit mit einem Datenverarbeitungsprogramm betreibbar ausgestaltet sein, mittels welchem die Prüfung, ob und in welchem Abschnitt die signaldurchlässige Abdeckung einen Bereich mit verringerter Signaldurchlässigkeit aufweist, über eine Differenzbilderkennung unter Einsatz desselben Sensors oder verschiedener Sensoren vorgenommen werden, wobei bei Einsatz verschiedener Sensoren insbesondere eine Sensorfusion eingesetzt wird. Ein geeignetes Verfahren für eine Sensorfusion ist beispielsweise in US 2010/0235129 A offenbart.

Vorzugsweise ist die Steuerungseinrichtung derart ausgestaltet, dass sie nach einer Positionsänderung der Umlenkeinrichtung diese neue Position an das Bordnetz des Fahrzeugs weitergibt, sodass dort eine Umrechnung der vom Sensor gelieferten Daten in der Weise erfolgen kann, dass der neue Strahlenweg im Vergleich zum ursprünglichen Strahlenweg als Korrekturgröße einbezogen wird. Die Umrechnung kann aber auch in der Recheneinheit des Sensorsystems erfolgen, sodass bereits positionskorrigierte Signale vom Sensorsystem an das Bordnetz des Fahrzeugs gesendet werden können.

Die Messeinrichtung und die Steuerungseinrichtung können unabhängig voneinander innerhalb oder außerhalb des Sensorgehäuses positioniert sein. In einigen Fällen kann es bevorzugt sein, die Messeinrichtung und die Steuerungseinrichtung innerhalb des Sensorgehäuses anzuordnen weil hierdurch die gesamte Einheit ein Bauteil bildet und abgesehen von der Energieversorgung und der Anbindung an das Datennetz des Fahrzeugs keine zusätzlichen Leitungen durch das Sensorgehäuse geführt werden müssen, was möglicherweise zu Dichtigkeitsproblemen führen könnte.

Nach einer bevorzugten Ausgestaltung des erfindungsgemäßen Sensorsystems ist die Messeinrichtung so ausgestaltet, dass diese ein Fehlersignal ausgeben kann, für den Fall, dass die Position der Umlenkeinrichtung nicht in der Weise veränderbar ist, dass der Bereich mit verringerter Signaldurchlässigkeit außerhalb des Erfassungsbereichs des Sensors liegt. Dieses Fehlersignal kann an die Bordelektronik des Fahrzeugs weitergeleitet werden und dort einen Fehlercode auslösen, der die Notwendigkeit des Austauschs des Sensors und/oder dessen nicht ordnungsgemäße Funktionsweise anzeigt, damit sich der Fahrzeugnutzer nicht auf einen defekten Sensor verlässt und es zu einer Fahrzeugbeschädigung oder dergleichen kommt.

Das Sensorsystem ist weiter bevorzugt derart ausgestaltet, dass die Prüfung, ob und in welchem Abschnitt die signaldurchlässige Abdeckung einen Bereich mit verringerter Signaldurchlässigkeit aufweist, beim Einschalten des Sensorsystems und /oder in frei wählbaren zeitlichen Intervallen durchführbar ist. Dadurch ist sichergestellt, dass der Sensor in regelmäßigen Abständen überprüft und dessen Funktionstätigkeit sichergestellt ist.

Das erfindungsgemäße Sensorsystem kann ferner so angelegt sein, dass zwischen dem Sensor und der signaldurchlässigen Abdeckung eine signaldurchlässige innere Schutzabdeckung vorgesehen ist, welche sich vorzugsweise bis an die seitlichen Innenwände der Gehäuseabdeckung erstreckt. Auf diese Weise kann der innenliegende Sensor vor schädigenden Einflüssen selbst dann geschützt bleiben, wenn die signaldurchlässige Abdeckung beispielsweise einen Riss oder ein Loch aufweist.

Die signaldurchlässige Abdeckung und/ oder die signaldurchlässige innere Schutzabdeckung können aus einem transparenten Kunststoff oder Glas aufgebaut sein, wobei der transparente Kunststoff insbesondere ausgewählt ist aus Polycarbonat, Polymethylmethacrylat, Polyethylentherephthalat, Cellulosetriacetat, amorphem Polyamid, Cycloolefinpolymer, Cycloolefincopolymer, Polyethylen, Polypropylen, Polyvinylalkohol oder aus Mischungen oder Copolymerisaten von diesen. Besonders bevorzugt sind hier auf Grund ihrer optischen und mechanischen Eigenschaften Polycarbonat und Polymethylmethacrylat, ganz besonders wegen des extrem zähen Verhaltens Polycarbonat.

Ein weiterer Gegenstand der vorliegenden Erfindung betrifft ein Verfahren zum Betreiben eines Sensorsystems für ein Kraftfahrzeug umfassend ein Sensorgehäuse und einen darin angeordneten aktiven oder passiven Sensor mit einer auf Strahlungsdetektion beruhenden Sensorik sowie einer dem Sensor zugeordneten Messeinrichtung, wobei das Sensorgehäuse auf seiner in Detektionsrichtung des Sensors befindlichen Seite eine für den Sensor signaldurchlässige Abdeckung aufweist und wobei der Erfassungsbereich des Sensors im Bereich der signaldurchlässigen Abdeckung eine geringere Ausdehnung besitzt als die signaldurchlässige Abdeckung, wobei das Verfahren dadurch gekennzeichnet ist, dass dem Sensor eine mit einer Steuerungseinrichtung gekoppelte bewegbare Umlenkeinrichtung zur Umlenkung der Strahlung des Sensors zugeordnet ist, wobei mittels der Messeinrichtung geprüft wird, ob und in welchem Abschnitt des Erfassungsbereichs des Sensors die signaldurchlässige Abdeckung einen Bereich mit verringerter Signaldurchlässigkeit aufweist, und falls ein Bereich mit verringerter Signaldurchlässigkeit detektiert wird, die Position der Umlenkeinrichtung mittels der Steuerungseinrichtung in der Weise verändert wird, dass der Bereich mit verringerter Signaldurchlässigkeit außerhalb des Erfassungsbereichs des Sensors liegt, wobei die Umlenkeinrichtung aus wenigstens zwei miteinander gekoppelten Umlenkelementen aufgebaut ist und die Umlenkeinrichtung oder wenigstens eines der Umlenkelemente aus einer passiven Position außerhalb des Erfassungsbereichs des Sensors in eine aktive Position im Erfassungsbereich des Sensors verfahrbar ist.

Nach einer bevorzugten Weiterbildung des erfindungsgemäßen Verfahrens ist ein Bereich mit verringerter Signaldurchlässigkeit dadurch definiert, dass in einer zusammenhängenden Fläche von wenigstens 1 % des Erfassungsbereichs des Sensors auf der signaldurchlässigen Abdeckung eine Dämpfung des über die Sensorik zu detektierenden Signals von wenigstens 5 %, verglichen mit der übrigen Fläche der signaldurchlässigen Abdeckung im Erfassungsbereich des Sensors, auftritt.

Die Erfindung betrifft ferner ein Fahrzeug, insbesondere Kraftfahrzeug, das mit wenigstens einem erfindungsgemäßen Sensorsystem ausgerüstet ist. Das Sensorsystem kann beispielsweise im Front-, Heck-, oder Seitenbereich eines Fahrzeugs eingesetzt werden, z.B. im Stoßfänger, Kühlergrill, Scheinwerfer, Frontpanel, Heckpanel, Rücklicht, Dachsäule, Scheibe oder Anbauteil, wie z.B. Außenspiegel. Das Sensorsystem kann in eine Öffnung eines Karosserieaußenteils eingebaut sein. Bevorzugt ist das Sensorsystem nahtlos in die Fahrzeugteiloberfläche integriert. Besonders bevorzugt ist das Karosserieaußenteil zugleich die Sensorschutzabdeckung. Die Positionierung der Sensoren hinter Karosseriebauteilen hat mehrere Vorteile gegenüber frei stehenden Sensoren, insbesondere ästhetische, aerodynamische und reparaturtechnische Vorteile. Als Sensorsysteme kommen vor allem solche mit einer sogenannten ADAS-Funktionalität (= Advanced Driver Assistance Systems) in Betracht. Dies sind beispielsweise Lidar-Sensoren, Scannende Lidar-Sensoren, Flash-Lidar-Sensoren, GHz- und THz-Radare für Nahfeld bis Fernfelderkennung, Kameras für das sichtbare bzw. infrarote Wellenlängenspektrum. Ein mögliches bevorzugtes Anwendungsgebiet ist die 360° Umfelderkennung für hoch automatisiertes und autonomes Fahren. Weiteres Aufgabengebiet: Im Stand können diese ADAS-Sensoren für den Endkunden relevante Komfortfunktionen leisten, z.B. mechatronische Komfortfunktionen wie Systeme zum berührungslosen Öffnen und Schließen von Türen und Heckklappen, oder z.B. licht- und anzeigenbasierte Komfortfunktionen.

Die Erfindung betrifft insbesondere die folgenden Ausführungsformen:
Nach einer ersten Ausführungsform betrifft die Erfindung ein Sensorsystem 200, 300 für ein Fahrzeug, insbesondere Kraftfahrzeug, umfassend ein Sensorgehäuse und einen darin angeordneten aktiven oder passiven Sensor 102 mit einer auf Strahlungsdetektion beruhenden Sensorik sowie einer dem Sensor 102 zugeordneten Messeinrichtung, wobei das Sensorgehäuse auf seiner in Detektionsrichtung des Sensors 102 befindlichen Seite eine für den Sensor 102 signaldurchlässige Abdeckung 106 aufweist und wobei der Erfassungsbereich des Sensors 102 im Bereich der signaldurchlässigen Abdeckung 106 eine geringere Ausdehnung besitzt als die signaldurchlässige Abdeckung 106, wobei das Sensorsystem 200, 300 dadurch gekennzeichnet ist, dass dem Sensor 102 eine mit einer Steuerungseinrichtung gekoppelte bewegbare Umlenkeinrichtung 201, zur Umlenkung der Strahlung des Sensors 102 zugeordnet ist, wobei die Messeinrichtung derart ausgebildet ist, dass sie geeignet ist, im Erfassungsbereich des Sensors 102 zu überprüfen, ob und in welchem Abschnitt die signaldurchlässige Abdeckung 106 einen Bereich mit verringerter Signaldurchlässigkeit 202, 302 aufweist, wobei die Messeinrichtung mit der Steuerungseinrichtung der Umlenkeinrichtung 201 in der Weise zusammenwirkt, dass die Steuerungseinrichtung die Position der Umlenkeinrichtung 201 in der Weise verändern kann, dass der Bereich mit verringerter Signaldurchlässigkeit 202, 302 außerhalb des Erfassungsbereichs des Sensors 102 liegt, wobei die Umlenkeinrichtung (201) aus wenigstens zwei miteinander gekoppelten Umlenkelementen (201a, 201b, 301a, 301b) aufgebaut ist und die Umlenkeinrichtung (201) oder wenigstens eines der Umlenkelemente (201a, 201b, 301a, 301b) aus einer passiven Position außerhalb des Erfassungsbereichs des Sensors (102) in eine aktive Position im Erfassungsbereich des Sensors (102) verfahrbar ist.

Nach einer zweiten Ausführungsform betrifft die Erfindung ein Sensorsystem nach Ausführungsform 1, dadurch gekennzeichnet, dass der Sensor 102 ausgewählt ist aus Radarsensoren, Lichtsensoren, insbesondere Lidar-Sensoren auf Basis von Lasern oder Leuchtdioden und Bilderfassungssensoren.

Nach einer dritten Ausführungsform betrifft die Erfindung ein Sensorsystem nach Ausführungsform 1 oder 2, dadurch gekennzeichnet, dass der Sensor 102 über eine Sendeeinrichtung und eine hiervon getrennte Empfangseinrichtung verfügt.

Nach einer vierten Ausführungsform betrifft die Erfindung ein Sensorsystem nach einer der vorstehenden Ausführungsformen, dadurch gekennzeichnet, dass die Umlenkeinrichtung 201 in alle Raumrichtungen verfahrbar, um sämtliche Achsen drehbar und/ oder kippbar ausgestaltet ist.

Nach einer fünften Ausführungsform betrifft die Erfindung ein Sensorsystem nach einer der vorstehenden Ausführungsformen, dadurch gekennzeichnet, dass der Umlenkeinrichtung 201 zu ihrer Bewegung wenigstens ein Elektromotor, ein piezoelektrisches Element, oder ein hydraulisches Element zugeordnet ist.

Nach einer sechsten Ausführungsform betrifft die Erfindung ein Sensorsystem nach einer der vorstehenden Ausführungsformen, dadurch gekennzeichnet, dass die Umlenkeinrichtung 201 am Sensorgehäuse fixiert ist, insbesondere zwischen der signaldurchlässigen Abdeckung 106 und dem Sensor 102.

Nach einer siebten Ausführungsform betrifft die Erfindung ein Sensorsystem nach einer der vorstehenden Ausführungsformen, dadurch gekennzeichnet, dass die Umlenkeinrichtung 201 wenigstens einen Spiegel, ein Prisma, eine Kompensationsplatte, ein Keilfenster, eine Stufenlinse, ein Blazegitter, ein diffraktives optisches Element, ein holographisch-optisches Element oder Kombinationen hiervon umfasst.

Nach einer achten Ausführungsform betrifft die Erfindung ein Sensorsystem nach einer der vorstehenden Ausführungsformen, dadurch gekennzeichnet, dass die wenigstens zwei miteinander gekoppelten Umlenkelemente 201a, 201b, 301a, 301b über die Steuerungseinrichtung gemeinsam oder getrennt bewegbar ausgestaltet sind oder wenigstens eines der Umlenkelemente 201a, 201b, 301a, 301b ortsfest in dem Sensorsystem angeordnet ist.

Nach einer neunten Ausführungsform betrifft die Erfindung ein Sensorsystem nach der achten Ausführungsform, dadurch gekennzeichnet, dass die wenigstens zwei miteinander gekoppelten Umlenkelemente (201a, 201b, 301a, 301b) über die Steuerungseinrichtung nur gemeinsam bewegbar ausgestaltet sind und wenigstens eines der Umlenkelemente (201a, 201b, 301a, 301b) ortsfest in dem Sensorsystem angeordnet ist, wobei das ortsfeste Umlenkelement (301b) auf der Innenseite der signaldurchlässigen Abdeckung (106) befestigt.

Nach einer zehnten Ausführungsform betrifft die Erfindung ein Sensorsystem nach einer der vorstehenden Ausführungsformen, dadurch gekennzeichnet, dass die Umlenkeinrichtung 201 derart ansteuerbar ist, dass vorgewählte Strahlversatzwege für die Strahlungsdetektion oder durch Selbstkalibrierung des Sensors 102 ermittelte Strahlversatzwege einstellbar sind.

Nach einer elften Ausführungsform betrifft die Erfindung ein Sensorsystem nach einer der vorstehenden Ausführungsformen, dadurch gekennzeichnet, dass die Prüfung, ob und in welchem Abschnitt die signaldurchlässige Abdeckung 106 einen Bereich mit verringerter Signaldurchlässigkeit 202, 302 aufweist, mittels einer der Messeinrichtung zugeordneten Recheneinheit durchführbar ist, wobei die Recheneinheit insbesondere mit einem Datenverarbeitungsprogramm betreibbar ist, mittels welchem die Prüfung, ob und in welchem Abschnitt die signaldurchlässige Abdeckung 106 einen Bereich mit verringerter Signaldurchlässigkeit 202, 302 aufweist, über eine Differenzbilderkennung unter Einsatz desselben Sensors 102 oder verschiedener Sensoren vorgenommen wird, wobei bei Einsatz verschiedener Sensoren vorzugsweise eine Sensorfusion eingesetzt wird.

Nach einer zwölften Ausführungsform betrifft die Erfindung ein Sensorsystem nach einer der vorstehenden Ausführungsformen, dadurch gekennzeichnet, dass die Messeinrichtung und die Steuerungseinrichtung unabhängig voneinander innerhalb oder außerhalb des Sensorgehäuses positioniert sind.

Nach einer dreizehnten Ausführungsform betrifft die Erfindung ein Sensorsystem nach einer der vorstehenden Ausführungsformen, dadurch gekennzeichnet, dass die Messeinrichtung so ausgestaltet ist, dass diese ein Fehlersignal ausgeben kann, für den Fall, dass die Position der Umlenkeinrichtung 201 nicht in der Weise veränderbar ist, dass der Bereich mit verringerter Signaldurchlässigkeit 202, 302 außerhalb des Erfassungsbereichs des Sensors 102 liegt.

Nach einer vierzehnten Ausführungsform betrifft die Erfindung ein Sensorsystem nach einer der vorstehenden Ausführungsformen, dadurch gekennzeichnet, dass das Sensorsystem 200, 300 derart ausgestaltet ist, dass die Prüfung, ob und in welchem Abschnitt die signaldurchlässige Abdeckung 106 einen Bereich mit verringerter Signaldurchlässigkeit 202, 302 aufweist, beim Einschalten des Sensorsystems 200, 300 und /oder in frei wählbaren zeitlichen Intervallen durchführbar ist.

Nach einer fünfzehnten Ausführungsform betrifft die Erfindung ein Sensorsystem nach einer der vorstehenden Ausführungsformen, dadurch gekennzeichnet, dass zwischen dem Sensor 102 und der signaldurchlässigen Abdeckung 106 eine signaldurchlässige innere Schutzabdeckung vorgesehen ist, welche sich vorzugsweise bis an die seitlichen Innenwände der Gehäuseabdeckung erstreckt, wobei sich die Umlenkeinrichtung besonders bevorzugt zwischen der inneren Schutzabdeckung und dem Sensor 102 befindet.

Nach einer sechzehnten Ausführungsform betrifft die Erfindung ein Sensorsystem nach einer der vorstehenden Ausführungsformen, dadurch gekennzeichnet, dass die signaldurchlässige Abdeckung 106 und/ oder die signaldurchlässige innere Schutzabdeckung 302 aus einem transparenten Kunststoff oder Glas aufgebaut sind, wobei der transparente Kunststoff insbesondere ausgewählt ist aus Polycarbonat, Polymethylmethacrylat, Polyethylentherephthalat, Cellulosetriacetat, amorphem Polyamid, Cycloolefinpolymer, Cycloolefincopolymer, Polyethylen, Polypropylen, Polyvinylalkohol oder aus Mischungen oder Copolymerisaten von diesen, wobei der transparente Kunststoff vorzugsweise Polycarbonat oder Polymethylmethacrylat ist.

Nach einer siebzehnten Ausführungsform betrifft die Erfindung ein Verfahren zum Betreiben eines Sensorsystems 200, 300 für ein Kraftfahrzeug umfassend ein Sensorgehäuse und einen darin angeordneten aktiven oder passiven Sensor 102 mit einer auf Strahlungsdetektion beruhenden Sensorik sowie einer dem Sensor 102 zugeordneten Messeinrichtung, wobei das Sensorgehäuse auf seiner in Detektionsrichtung des Sensors 102 befindlichen Seite eine für den Sensor 102 signaldurchlässige Abdeckung 106 aufweist und wobei der Erfassungsbereich des Sensors 102 im Bereich der signaldurchlässigen Abdeckung 106 eine geringere Ausdehnung besitzt als die signaldurchlässige Abdeckung 106, wobei das Verfahren dadurch gekennzeichnet ist, dass dem Sensor 102 eine mit einer Steuerungseinrichtung gekoppelte bewegbare Umlenkeinrichtung 201 zur Umlenkung der Strahlung des Sensors 102 zugeordnet ist, wobei mittels der Messeinrichtung geprüft wird, ob und in welchem Abschnitt des Erfassungsbereichs des Sensors 102 die signaldurchlässige Abdeckung 106 einen Bereich mit verringerter Signaldurchlässigkeit 202, 302 aufweist, und falls ein Bereich mit verringerter Signaldurchlässigkeit 202, 302 detektiert wird, die Position der Umlenkeinrichtung 201 mittels der Steuerungseinrichtung in der Weise verändert wird, dass der Bereich mit verringerter Signaldurchlässigkeit 202, 302 außerhalb des Erfassungsbereichs des Sensors 102 liegt, wobei die Umlenkeinrichtung (201) aus wenigstens zwei miteinander gekoppelten Umlenkelementen (201a, 201b, 301a, 301b) aufgebaut ist und die Umlenkeinrichtung (201) oder wenigstens eines der Umlenkelemente (201a, 201b, 301a, 301b) aus einer passiven Position außerhalb des Erfassungsbereichs des Sensors (102) in eine aktive Position im Erfassungsbereich des Sensors (102) verfahrbar ist.

Nach einer achtzehnten Ausführungsform betrifft die Erfindung ein Verfahren nach Ausführungsform 17, dadurch gekennzeichnet, dass ein Bereich mit verringerter Signaldurchlässigkeit 202, 302 dadurch definiert ist, dass in einer zusammenhängenden Fläche von wenigstens 1 % des Erfassungsbereichs des Sensors 102 auf der signaldurchlässigen Abdeckung 106 eine Dämpfung des über die Sensorik zu detektierenden Signals von wenigstens 5 %, verglichen mit der übrigen Fläche der signaldurchlässigen Abdeckung 106 im Erfassungsbereich des Sensors 102, auftritt.

Nach einer neunzehnten Ausführungsform betrifft die Erfindung ein Fahrzeug, insbesondere Kraftfahrzeug, das mit wenigstens einem Sensorsystem 200, 300 nach einem der Ausführungsformen 1 bis 16 ausgerüstet ist.

Die Erfindung wird im Folgenden anhand der Fign. 1 bis 3b näher erläutert. Darin zeigt
**Fig. 1** einen schematischen Sensoraufbau nach dem Stand der Technik;
**Fig. 2a****/b** einen erfindungsgemäßen Sensor mit verschiebbaren Umlenkeinrichtung in zwei Positionen, (2a) gestörtes Sensorsignal, (2b) ungestörtes Sensorsignal nach Umlenkung des Signals durch die Umlenkeinrichtung sowie
**Fig. 3a****/b** eine weitere erfindungsgemäße Ausführungsform mit räumlich getrennten Umlenkeinheiten in zwei Positionen, (3a) gestörtes Sensorsignal, (3b) ungestörtes Sensorsignal nach Umlenkung des Signals durch die Umlenkeinrichtung.

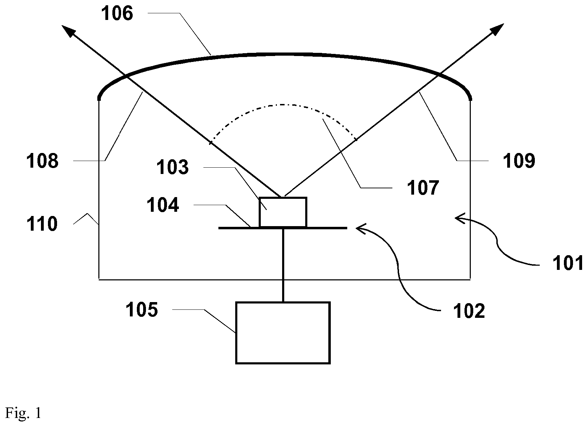

In Fig. 1 ist ein Sensorsystem 101 für ein Kraftfahrzeug schematisch in seitlicher Schnittdarstellung abgebildet. Bei dem Sensorsystem 101 handelt es sich um einen Lidarsensor. Das Sensorsystem 101 umfasst ein Sensorgehäuse 110 und einen darin angeordneten Sensor 102 aus einem Sender 103 und Empfänger 104 mit einem Erfassungswinkel 107, der durch den Erfassungsbereich 108, 109 definiert ist. Der Sensor 102 ist vorliegend als Lasersensor mit Flugzeitmessung ausgestaltet. Dem Sensor 102 ist eine Messeinrichtung 105 zur Verarbeitung der Sensorsignale zugeordnet. Das Sensorgehäuse 110 weist auf seiner in Detektionsrichtung des Sensors befindlichen Seite eine für den Sensor 102 signaldurchlässige Abdeckung 106 auf.

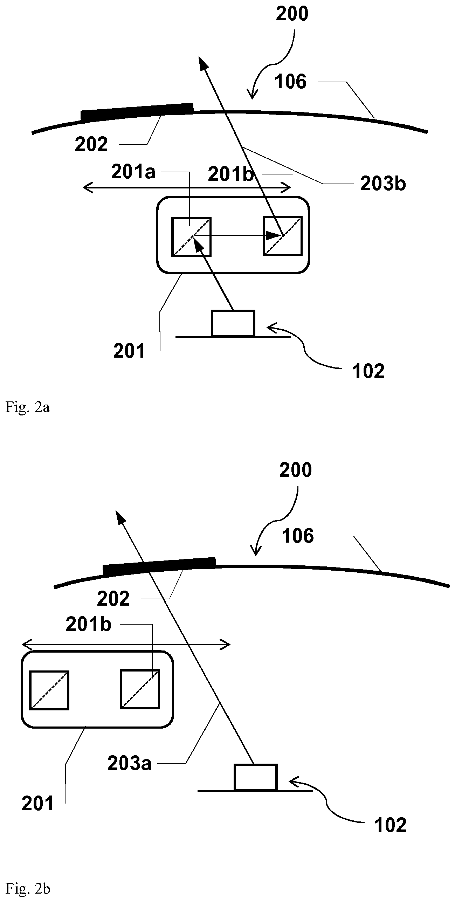

In Fig. 2a ist ein erfindungsgemäßes Sensorsystem 200 abgebildet. Bei diesem ist eine horizontal verfahrbare Umlenkeinrichtung 201 mit zwei Umlenkeinrichtungen 201a und 201b vorgesehen, mit welcher der Signalweg des Sensors 102 verändert werden kann, sobald auf der signaldurchlässigen Abdeckung 106 aus Polycarbonat eine signalbeeinträchtigende Beschädigung 202 festgestellt wird, die einen ersten Teilabschnitt 203a des Erfassungsbereichs des Sensors 102 beeinträchtigt, sodass der Sensor 102 nur noch in einem zweiten Teilabschnitt Signale versenden bzw. empfangen kann. Die Umlenkeinrichtung 201 befindet sich hier in passiver Position, d.h. außerhalb des Strahlung- und Empfangsbereichs des Sensors 102.

In Fig. 2b ist das Sensorsystem 200 aus Fig. 2a dargestellt, nachdem die Umlenkeinrichtung 201 horizontal in einen solchen Bereich verfahren wurde, dass der Signalweg 203b des Sensors 102 an der Beschädigung 202 vorbeigeführt wird, sodass der Sensor 102 wieder über seinen gesamten Erfassungswinkel funktionstüchtig ist.

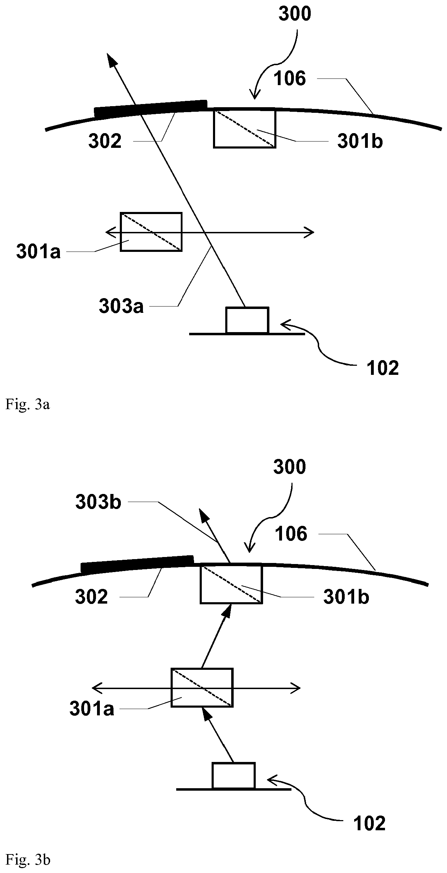

Fign. 3a und 3b zeigen eine weitere Erfindungsgemäße Ausführungsform eines erfindungsgemäßen Sensorsystems 300. Der wesentliche Unterschied besteht darin, dass das hier gezeigte Sensorsystem 300 mit einer räumlich getrennten Umlenkeinrichtung ausgerüstet ist, die über ein bewegliches erstes Umlenkelement 301a und ein ortsfestes, an der Innenseite der signaldurchlässigen Abdeckung 106 befestigtes zweites Umlenkelement 301b verfügt. Das erste 301a und zweite Umlenkelement 301b bilden damit gemeinsam die Umlenkeinrichtung. In Fig. 3a befindet sich das erste Umlenkelement 301a in einer passiven Position, d.h. außerhalb des Strahlung- und Empfangsbereichs des Sensors 102. Der Signalweg 303a des Sensors 102 ist hier durch eine signalbeeinträchtigende Beschädigung 302 gestört.

In Fig. 3b wurde das bewegliche erste Umlenkelement 301a aus seiner passiven in eine aktive Position verfahren, also in den Signalweg des Sensors 102. Hierdurch wird ein neuer Signalweg 303b eingestellt, sodass das Signal über das bewegliche erste Umlenkelement 301a und das ortsfeste zweite Umlenkelement 301b an der signalbeeinträchtigende Beschädigung 302 vorbeigeführt wird.

### Bezugszeichenliste:

- 101: Sensorsystem (Stand der Technik)
- 102: Sensor
- 103: Sender
- 104: Empfänger
- 105: Messeinrichtung
- 106: signaldurchlässige Abdeckung
- 107: Erfassungswinkel
- 108: Erfassungsbereich
- 109: Erfassungsbereich
- 110: Sensorgehäuse
- 200: Sensorsystem (Erfindung)
- 201: horizontal verfahrbare Umlenkeinrichtung
- 201a: erstes Umlenkelement
- 201b: zweites Umlenkelement
- 202: signalbeeinträchtigende Beschädigung
- 203a: gestörter Signalweg
- 203b: ungestörter Signalweg
- 300: Sensorsystem (Erfindung)
- 301a: erstes, bewegliches Umlenkelement
- 301b: zweites, ortsfestes Umlenkelement
- 302: signalbeeinträchtigende Beschädigung
- 303a: gestörter Signalweg
- 303b: ungestörter Signalweg

## Patentansprüche

1. Sensorsystem (200, 300) für ein Fahrzeug, insbesondere Kraftfahrzeug, umfassend ein Sensorgehäuse und einen darin angeordneten aktiven oder passiven Sensor (102) mit einer auf Strahlungsdetektion beruhenden Sensorik sowie einer dem Sensor (102) zugeordneten Messeinrichtung, wobei das Sensorgehäuse auf seiner in Detektionsrichtung des Sensors (102) befindlichen Seite eine für den Sensor (102) signaldurchlässige Abdeckung (106) aufweist und wobei der Erfassungsbereich des Sensors (102) im Bereich der signaldurchlässigen Abdeckung (106) eine geringere Ausdehnung besitzt als die signaldurchlässige Abdeckung (106),
wobei
dem Sensor (102) eine mit einer Steuerungseinrichtung gekoppelte bewegbare Umlenkeinrichtung (201), zur Umlenkung der Strahlung des Sensors (102) zugeordnet ist, wobei die Messeinrichtung derart ausgebildet ist, dass sie geeignet ist, im Erfassungsbereich des Sensors (102) zu überprüfen, ob und in welchem Abschnitt die signaldurchlässige Abdeckung (106) einen Bereich mit verringerter Signaldurchlässigkeit (202, 302) aufweist, wobei die Messeinrichtung mit der Steuerungseinrichtung der Umlenkeinrichtung (201) in der Weise zusammenwirkt, dass die Steuerungseinrichtung die Position der Umlenkeinrichtung (201) in der Weise verändern kann, dass der Bereich mit verringerter Signaldurchlässigkeit (202, 302) außerhalb des Erfassungsbereichs des Sensors (102) liegt, wobei
die Umlenkeinrichtung (201) aus wenigstens zwei miteinander gekoppelten Umlenkelementen (201a, 201b, 301a, 301b) aufgebaut ist, **dadurch gekennzeichnet, dass**
die Umlenkeinrichtung (201) oder wenigstens eines der Umlenkelemente (201a, 201b, 301a, 301b) aus einer passiven Position außerhalb des Erfassungsbereichs des Sensors (102) in eine aktive Position im Erfassungsbereich des Sensors (102) verfahrbar ist.

2. Sensorsystem nach Anspruch 1, **dadurch gekennzeichnet, dass** der Sensor (102) ausgewählt ist aus Radarsensoren, Lichtsensoren, insbesondere Lidar-Sensoren auf Basis von Lasern oder Leuchtdioden und Bilderfassungssensoren.

3. Sensorsystem nach Anspruch 1 oder 2, **dadurch gekennzeichnet, dass** der Sensor (102) über eine Sendeeinrichtung und eine hiervon getrennte Empfangseinrichtung verfügt.

4. Sensorsystem nach einem der vorstehenden Ansprüche, **dadurch gekennzeichnet, dass** die Umlenkeinrichtung (201) in alle Raumrichtungen verfahrbar ausgestaltet ist.

5. Sensorsystem nach einem der vorstehenden Ansprüche, **dadurch gekennzeichnet, dass** der Umlenkeinrichtung (201) zu ihrer Bewegung wenigstens ein Elektromotor, ein piezoelektrisches Element, oder ein hydraulisches Element zugeordnet ist.

6. Sensorsystem nach einem der vorstehenden Ansprüche, **dadurch gekennzeichnet, dass** die Umlenkeinrichtung (201) am Sensorgehäuse fixiert ist, insbesondere zwischen der signaldurchlässigen Abdeckung (106) und dem Sensor (102).

7. Sensorsystem nach einem der vorstehenden Ansprüche, **dadurch gekennzeichnet, dass** die Umlenkeinrichtung (201) wenigstens einen Spiegel, ein Prisma, eine Kompensationsplatte, ein Keilfenster, eine Stufenlinse, ein Blazegitter, ein diffraktives optisches Element, ein holographisch-optisches Element oder Kombinationen hiervon umfasst.

8. Sensorsystem nach einem der vorstehenden Ansprüche, **dadurch gekennzeichnet, dass** die wenigstens zwei miteinander gekoppelten Umlenkelemente (201a, 201b, 301a, 301b) über die Steuerungseinrichtung gemeinsam oder getrennt bewegbar ausgestaltet sind oder wenigstens eines der Umlenkelemente (201a, 201b, 301a, 301b) ortsfest in dem Sensorsystem angeordnet ist.

9. Sensorsystem nach Anspruch 8, **dadurch gekennzeichnet, dass** die wenigstens zwei miteinander gekoppelten Umlenkelemente (201a, 201b, 301a, 301b) über die Steuerungseinrichtung nur gemeinsam bewegbar ausgestaltet sind und wenigstens eines der Umlenkelemente (201a, 201b, 301a, 301b) ortsfest in dem Sensorsystem angeordnet ist, wobei das ortsfeste Umlenkelement (301b) auf der Innenseite der signaldurchlässigen Abdeckung (106) befestigt ist.

10. Sensorsystem nach einem der vorstehenden Ansprüche, **dadurch gekennzeichnet, dass** die Prüfung, ob und in welchem Abschnitt die signaldurchlässige Abdeckung (106) einen Bereich mit verringerter Signaldurchlässigkeit (202, 302) aufweist, mittels einer der Messeinrichtung zugeordneten Recheneinheit durchführbar ist, wobei die Recheneinheit insbesondere mit einem Datenverarbeitungsprogramm betreibbar ist, mittels welchem die Prüfung, ob und in welchem Abschnitt die signaldurchlässige Abdeckung (106) einen Bereich mit verringerter Signaldurchlässigkeit (202, 302) aufweist, über eine Differenzbilderkennung unter Einsatz desselben Sensors (102) oder verschiedener Sensoren vorgenommen wird, wobei bei Einsatz verschiedener Sensoren vorzugsweise eine Sensorfusion eingesetzt wird.

11. Sensorsystem nach einem der vorstehenden Ansprüche, **dadurch gekennzeichnet, dass** die Messeinrichtung und die Steuerungseinrichtung unabhängig voneinander innerhalb oder außerhalb des Sensorgehäuses positioniert sind.

12. Sensorsystem nach einem der vorstehenden Ansprüche, **dadurch gekennzeichnet, dass** die Messeinrichtung so ausgestaltet ist, dass diese ein Fehlersignal ausgeben kann, für den Fall, dass die Position der Umlenkeinrichtung (201) nicht in der Weise veränderbar ist, dass der Bereich mit verringerter Signaldurchlässigkeit (202, 302) außerhalb des Erfassungsbereichs des Sensors (102) liegt.

13. Sensorsystem nach einem der vorstehenden Ansprüche, **dadurch gekennzeichnet, dass** das Sensorsystem (200, 300) derart ausgestaltet ist, dass die Prüfung, ob und in welchem Abschnitt die signaldurchlässige Abdeckung (106) einen Bereich mit verringerter Signaldurchlässigkeit (202, 302) aufweist, beim Einschalten des Sensorsystems (200, 300) und /oder in frei wählbaren zeitlichen Intervallen durchführbar ist.

14. Sensorsystem nach einem der vorstehenden Ansprüche, **dadurch gekennzeichnet, dass** die signaldurchlässige Abdeckung (106) aus einem transparenten Kunststoff oder Glas aufgebaut ist, wobei der transparente Kunststoff insbesondere ausgewählt ist aus Polycarbonat, Polymethylmethacrylat, Polyethylentherephthalat, Cellulosetriacetat, amorphem Polyamid, Cycloolefinpolymer, Cycloolefincopolymer, Polyethylen, Polypropylen, Polyvinylalkohol oder aus Mischungen oder Copolymerisaten von diesen, wobei der transparente Kunststoff vorzugsweise Polycarbonat oder Polymethylmethacrylat ist.

15. Verfahren zum Betreiben eines Sensorsystems (200, 300) für ein Kraftfahrzeug umfassend ein Sensorgehäuse und einen darin angeordneten aktiven oder passiven Sensor (102) mit einer auf Strahlungsdetektion beruhenden Sensorik sowie einer dem Sensor (102) zugeordneten Messeinrichtung, wobei das Sensorgehäuse auf seiner in Detektionsrichtung des Sensors (102) befindlichen Seite eine für den Sensor (102) signaldurchlässige Abdeckung (106) aufweist und wobei der Erfassungsbereich des Sensors (102) im Bereich der signaldurchlässigen Abdeckung (106) eine geringere Ausdehnung besitzt als die signaldurchlässige Abdeckung (106),
wobei
dem Sensor (102) eine mit einer Steuerungseinrichtung gekoppelte bewegbare Umlenkeinrichtung (201) zur Umlenkung der Strahlung des Sensors (102) zugeordnet ist, wobei mittels der Messeinrichtung geprüft wird, ob und in welchem Abschnitt des Erfassungsbereichs des Sensors (102) die signaldurchlässige Abdeckung (106) einen Bereich mit verringerter Signaldurchlässigkeit (202, 302) aufweist, und falls ein Bereich mit verringerter Signaldurchlässigkeit (202, 302) detektiert wird, die Position der Umlenkeinrichtung (201) mittels der Steuerungseinrichtung in der Weise verändert wird, dass der Bereich mit verringerter Signaldurchlässigkeit (202, 302) außerhalb des Erfassungsbereichs des Sensors (102) liegt, wobei
die Umlenkeinrichtung (201) aus wenigstens zwei miteinander gekoppelten Umlenkelementen (201a, 201b, 301a, 301b) aufgebaut ist, dadurch kekennzeichnet, dass
die Umlenkeinrichtung (201) oder wenigstens eines der Umlenkelemente (201a, 201b, 301a, 301b) aus einer passiven Position außerhalb des Erfassungsbereichs des Sensors (102) in eine aktive Position im Erfassungsbereich des Sensors (102) verfahrbar ist.

16. Verfahren nach Anspruch 15, **dadurch gekennzeichnet, dass** ein Bereich mit verringerter Signaldurchlässigkeit (202, 302) dadurch definiert ist, dass in einer zusammenhängenden Fläche von wenigstens 1 % des Erfassungsbereichs des Sensors (102) auf der signaldurchlässigen Abdeckung (106) eine Dämpfung des über die Sensorik zu detektierenden Signals von wenigstens 5 %, verglichen mit der übrigen Fläche der signaldurchlässigen Abdeckung (106) im Erfassungsbereich des Sensors (102), auftritt.

17. Fahrzeug, insbesondere Kraftfahrzeug, das mit wenigstens einem Sensorsystem (200, 300) nach einem der Ansprüche 1 bis 14 ausgerüstet ist.

## Claims

1. Sensor system (200, 300) for a vehicle, in particular a motor vehicle, comprising a sensor housing and an active or passive sensor (102) arranged therein with sensor technology based on radiation detection and a measuring device assigned to the sensor (102), wherein the sensor housing has a cover (106), which is signal-transmissive for the sensor (102), on its side located in the detection direction of the sensor (102) and wherein the detection area of the sensor (102) in the area of the signal-transmissive cover (106) has a smaller extent than the signal-transmissive cover (106),
wherein
the sensor (102) is assigned a movable deflection device (201) coupled to a control device for deflection of the radiation of the sensor (102), wherein the measuring device is designed in such a way that it is suitable to check in the detection area of the sensor (102) whether and in which section the signal-transmissive cover (106) has an area with reduced signal transmissivity (202, 302), wherein the measuring device cooperates with the control device of the deflection device (201) in such a way that the control device can change the position of the deflection device (201) in such a way that the area with reduced signal transmissivity (202, 302) is outside the detection area of the sensor (102), wherein
the deflection device (201) is composed of at least two coupled deflection elements (201a, 201b, 301a, 301b), **characterized in that**
the deflection device (201) or at least one of the deflection elements (201a, 201b, 301a, 301b) can be moved from a passive position outside the detection area of the sensor (102) to an active position within the detection area of the sensor (102).

2. Sensor system according to Claim 1, **characterized in that** the sensor (102) is selected from radar sensors, light sensors, in particular lidar sensors based on lasers or light-emitting diodes and image acquisition sensors.

3. Sensor system according to Claim 1 or 2, **characterized in that** the sensor (102) has a transmitting device and a separate receiving device.

4. Sensor system according to any one of the above claims, **characterized in that** the deflection device (201) is designed to be movable in all spatial directions.

5. Sensor system according to any one of the above claims, **characterized in that** the deflection device (201) is assigned at least one electric motor, a piezoelectric element, or a hydraulic element for the movement thereof.

6. Sensor system according to any one of the above claims, **characterized in that** the deflection device (201) is fixed to the sensor housing, in particular between the signal-transmissive cover (106) and the sensor (102).

7. Sensor system according to any one of the above claims, **characterized in that** the deflection device (201) comprises at least one mirror, a prism, a compensation plate, a wedge window, a step lens, a blaze grating, a diffractive optical element, a holographic-optical element, or combinations thereof.

8. Sensor system according to any one of the above claims, **characterized in that** the at least two coupled deflection elements (201a, 201b, 301a, 301b) are designed to be jointly or separately movable by the control device or at least one of the deflection elements (201a, 201b, 301a, 301b) is fixedly arranged in the sensor system.

9. Sensor system according to Claim 8, **characterized in that** the at least two coupled deflection elements (201a, 201b, 301a, 301b) can only be moved jointly by the control device and at least one of the deflection elements (201a, 201b, 301a, 301b) is fixedly arranged in the sensor system, wherein the fixed deflection element (301b) is attached to the inside of the signal-transmissive cover (106).

10. Sensor system according to any one of the above claims, **characterized in that** the check of whether and in which section the signal-transmissive cover (106) has an area with reduced signal transmissivity (202, 302) can be carried out by means of a computing unit assigned to the measuring device, wherein the computing unit can in particular be operated with a data processing program, by means of which the check of whether and in which section the signal-transmissive cover (106) has an area with reduced signal transmissivity (202, 302) is carried out by differential image detection using the same sensor (102) or different sensors, wherein sensor fusion is preferably used when using different sensors.

11. Sensor system according to any one of the above claims, **characterized in that** the measuring device and the control device are positioned independently of each other inside or outside the sensor housing.

12. Sensor system according to any one of the above claims, **characterized in that** the measuring device is designed in such a way that it can output an error signal in the event that the position of the deflection device (201) cannot be changed in such a way that the area with reduced signal transmissivity (202, 302) is outside the detection area of the sensor (102).

13. Sensor system according to any one of the above claims, **characterized in that** the sensor system (200, 300) is designed in such a way that the check of whether and in which section the signal-transmissive cover (106) has an area with reduced signal transmissivity (202, 302) can be carried out when switching on the sensor system (200, 300) and/or at freely selectable time intervals.

14. Sensor system according to any one of the above claims, **characterized in that** the signal-transmissive cover (106) is constructed of a transparent plastic or glass, wherein the transparent plastic is in particular selected from polycarbonate, polymethyl methacrylate, polyethylene terephthalate, cellulose triacetate, amorphous polyamide, cycloolefin polymer, cycloolefin copolymer, polyethylene, polypropylene, polyvinyl alcohol or from mixtures or copolymers of these, wherein the transparent plastic is preferably polycarbonate or polymethyl methacrylate.

15. Method for operating a sensor system (200, 300) for a motor vehicle comprising a sensor housing and an active or passive sensor (102) arranged therein with sensor technology based on radiation detection and a measuring device assigned to the sensor (102), wherein the sensor housing has a cover (106), which is signal-transmissive for the sensor (102), on its side located in the detection direction of the sensor (102) and wherein the detection area of the sensor (102) in the area of the signal-transmissive cover (106) has a smaller extent than the signal-transmissive cover (106) ,
wherein
a movable deflection device (201) coupled to a control device is assigned to the sensor (102) for deflection of the radiation of the sensor (102), wherein the measuring device is used to check whether and in which section of the detection area of the sensor (102) the signal-transmissive cover (106) has an area with reduced signal transmissivity (202, 302), and if an area with reduced signal transmissivity (202, 302) is detected, the position of the deflection device (201) is changed by means of the control device in such a way that the area with reduced signal transmissivity (202, 302) is outside the detection area of the sensor (102), wherein
the deflection device (201) is composed of at least two coupled deflection elements (201a, 201b, 301a, 301b), **characterized in that**
the deflection device (201) or at least one of the deflection elements (201a, 201b, 301a, 301b) can be moved from a passive position outside the detection area of the sensor (102) to an active position within the detection area of the sensor (102).

16. Method according to Claim 15, **characterized in that** an area with reduced signal transmissivity (202, 302) is defined **in that** attenuation of the signal to be detected by the sensor system of at least 5% occurs in a contiguous area of at least 1% of the detection area of the sensor (102) on the signal-transmissive cover (106) compared to the remaining area of the signal-transmissive cover (106) in the detection area of the sensor (102).

17. Vehicle, in particular a motor vehicle, which is equipped with at least one sensor system (200, 300) according to any one of Claims 1 to 14.

## Revendications

1. Système de capteur (200, 300) destiné à un véhicule, en particulier un véhicule automobile, et comprenant un boîtier de capteur et un capteur actif ou passif (102) qui est disposé à l'intérieur et qui est pourvu d'une technique de capteur reposant sur la détection de rayonnement et d'un dispositif de mesure associé au capteur (102), le boîtier de capteur comportant un couvercle (106) qui est transparent au signal provenant du capteur (102) sur son côté situé dans la direction de détection du capteur (102) et la zone de détection du capteur (102) possédant dans la zone du couvercle (106) transparent au signal une étendue plus petite que le couvercle (106) transparent au signal,
le capteur (102) étant associé à un dispositif de déviation mobile (201) qui est accouplé à un dispositif de commande et qui est destiné à dévier le rayonnement du capteur (102), le dispositif de mesure étant conçu de manière à être apte à vérifier dans la zone de détection du capteur (102) si et dans quelle portion le couvercle (106) transparent au signal comporte une zone à transparence au signal réduite (202, 302), le dispositif de mesure coopérant avec le dispositif de commande du dispositif de déviation (201) de telle manière que le dispositif de commande puisse modifier la position du dispositif de déviation (201) de telle manière que la zone à transparence au signal réduite (202, 302) soit située à l'extérieur de la zone de détection du capteur (102),
le dispositif de déviation (201) étant élaboré à partir d'au moins deux éléments de déviation (201a, 201b, 301a, 301b) accouplés l'un à l'autre, **caractérisé en ce que**
le dispositif de déviation (201) ou l'un au moins des éléments de déviation (201a, 201b, 301a, 301b) peut être déplacé d'une position passive à l'extérieur de la zone de détection du capteur (102) à une position active dans la zone de détection du capteur (102).

2. Système de capteur selon la revendication 1, **caractérisé en ce que** le capteur (102) est choisi parmi les capteurs radar, les capteurs de lumière, en particulier les capteurs lidar à base de lasers ou de diodes électroluminescentes et les capteurs de capture d'images.

3. Système de capteur selon la revendication 1 ou 2, **caractérisé en ce que** le capteur (102) dispose d'un dispositif d'émission et d'un dispositif de réception séparé de celui-ci.

4. Système de capteur selon l'une des revendications précédentes, **caractérisé en ce que** le dispositif de déviation (201) est conçu pour être mobile dans toutes les directions de l'espace.

5. Système de capteur selon l'une des revendications précédentes, **caractérisé en ce qu'**au moins un moteur électrique, un élément piézoélectrique ou un élément hydraulique est associé au dispositif de déviation (201) afin de déplacer celui-ci.

6. Système de capteur selon l'une des revendications précédentes, **caractérisé en ce que** le dispositif de déviation (201) est fixé au boîtier de capteur, en particulier entre le couvercle (106) transparent au signal et le capteur (102).

7. Système de capteur selon l'une des revendications précédentes, **caractérisé en ce que** le dispositif de déviation (201) comprend au moins un miroir, un prisme, une plaque de compensation, une fenêtre en coin, une lentille à gradins, un réseau échelette, un élément optique diffractif, un élément optique holographique ou des combinaisons de ceux-ci.

8. Système de capteur selon l'une des revendications précédentes, **caractérisé en ce que** les au moins deux éléments de déviation (201a, 201b, 301a, 301b) accouplés l'un à l'autre sont conçus pour être mobiles conjointement ou séparément par le biais du dispositif de commande ou au moins un des éléments de déviation (201a, 201b, 301a, 301b) est disposé de manière fixe dans le système de capteur.

9. Système de capteur selon la revendication 8, **caractérisé en ce que** les au moins deux éléments de déviation (201a, 201b, 301a, 301b) accouplés l'un à l'autre sont conçus pour être mobiles uniquement conjointement par le biais du dispositif de commande et l'un au moins des éléments de déviation (201a, 201b, 301a, 301b) est disposé de manière fixe dans le système de capteur, l'élément de déviation fixe (301b) étant fixé du côté intérieur du couvercle (106) transparent au signal.

10. Système de capteur selon l'une des revendications précédentes, **caractérisé en ce que** la vérification visant à déterminer si et dans quelle portion le couvercle (106) transparent au signal comporte une zone à transparence au signal réduite (202, 302) peut être effectuée au moyen d'une unité de calcul associée au dispositif de mesure, l'unité de calcul pouvant être exploitée notamment avec un programme de traitement de données au moyen duquel la vérification visant à déterminer si et dans quelle portion le couvercle (106) transparent au signal comporte une zone à transparence au signal réduite (202, 302) peut être effectuée par le biais d'une reconnaissance d'image différentielle à l'aide du même capteur (102) ou de capteurs différents, de préférence une fusion de capteurs étant utilisée lors de l'utilisation de différents capteurs.

11. Système de capteur selon l'une des revendications précédentes, **caractérisé en ce que** le dispositif de mesure et le dispositif de commande sont positionnés indépendamment l'un de l'autre à l'intérieur ou à l'extérieur du boîtier de capteur.

12. Système de capteurs selon l'une des revendications précédentes, **caractérisé en ce que** le dispositif de mesure est conçu de manière à pouvoir délivrer un signal d'erreur dans le cas où la position du dispositif de déviation (201) ne peut pas être modifiée de manière que la zone à transparence au signal réduite (202, 302) soit située à l'extérieur de la zone de détection du capteur (102).

13. Système de capteur selon l'une des revendications précédentes, **caractérisé en ce que** le système de capteur (200, 300) est conçu de manière que la vérification visant à déterminer si et dans quelle portion le couvercle (106) transparent au signal comporte une zone à transparence au signal réduite (202, 302), lorsque le système de capteur (200, 300) est activé et/ou à des intervalles de temps librement sélectionnables.

14. Système de capteur selon l'une des revendications précédentes, **caractérisé en ce que** le couvercle (106) transparent au signal est en une matière synthétique transparente ou en verre, la matière synthétique transparente étant notamment choisie parmi le polycarbonate, le polyméthacrylate de méthyle, le polyéthylène téréphtalate, le triacétate de cellulose, le polyamide amorphe, le polymère de cyclooléfine, le copolymère de cyclooléfine, le polyéthylène, le polypropylène, l'alcool polyvinylique ou des mélanges ou copolymères de ceux-ci, la matière synthétique transparente étant de préférence du polycarbonate ou du polyméthacrylate de méthyle.

15. Procédé de fonctionnement d'un système de capteur (200, 300) destiné à un véhicule automobile et comprenant un boîtier de capteur et un capteur actif ou passif (102) qui est disposé à l'intérieur et qui est pourvu d'une technique de capteur reposant sur la détection de rayonnement et d'un dispositif de mesure associé au capteur (102),
le boîtier de capteur comportant un couvercle (106) qui est transparent au signal provenant du capteur (102) sur son côté situé dans la direction de détection du capteur (102) et la zone de détection du capteur (102) possédant dans la zone du couvercle (106) transparent au signal une étendue plus petite que le couvercle (106) transparent au signal,
le capteur (102) étant associé à un dispositif de déviation mobile (201) accouplé à un dispositif de commande et destiné à dévier le rayonnement du capteur (102),
le dispositif de mesure étant utilisé pour vérifier si et dans quelle portion de la zone de détection du capteur (102) le couvercle (106) transparent au signal comporte une zone à transparence au signal réduite (202, 302) et, dans le cas où une zone à transparence au signal réduite (202, 302) est détectée, la position du dispositif de déviation (201) étant modifiée au moyen du dispositif de commande de manière que la zone à transparence au signal réduite (202, 302) soit située à l'extérieure de la zone de détection du capteur (102),
le dispositif de déviation (201) comprenant au moins deux éléments de déviation (201a, 201b, 301a, 301b) accouplés l'un à l'autre, **caractérisé en ce que**
le dispositif de déviation (201) ou l'un au moins des éléments de déviation (201a, 201b, 301a, 301b) peut être déplacé d'une position passive à l'extérieur de la zone de détection du capteur (102) à une position active dans la zone de détection du capteur (102).

16. Procédé selon la revendication 15, **caractérisé en ce qu'**une zone à transparence au signal réduite (202, 302) est définie par le fait que dans une surface continue correspondant à au moins 1 % de la zone de détection du capteur (102) sur le couvercle (106) transparent au signal apparaît une atténuation du signal à détecter par le biais de la technique de capteur qui correspond à au moins 5 % de la surface restante du couvercle (106) transparent au signal dans la zone de détection du capteur (102).

17. Véhicule, notamment véhicule automobile, qui est équipé d'au moins un système de capteur (200, 300) selon l'une des revendications 1 à 14.
